# EUROPÄISCHE PATENTSCHRIFT

(11) **EP 3 904 539 B1**
(45) Veröffentlichungstag und Bekanntmachung des Hinweises auf die Patenterteilung: **19.07.2023**
(21) Anmeldenummer: 21170615.5
(22) Anmeldetag: 27.04.2021
(51) Int. Cl.: C21B 3/04, C21C 5/46, C21C 5/52, C22B 7/04, C21C 7/076

(54) **VERFAHREN ZUR KREISLAUFFÜHRUNG METALLURGISCHER SCHLACKEN UND VERWENDUNG EINER SCHLACKE HIERFÜR**
METHOD FOR RECIRCULATING METALLURGICAL SLAGS AND USE OF A SLAG THEREFOR
PROCÉDÉ DE CIRCULATION DES SCORIES MÉTALLURGIQUES ET UTILISATION CORRESPONDANTE D'UNE SCORIE

(30) Priorität: 27.04.2020 DE 102020111459
(43) Veröffentlichungstag der Anmeldung: 03.11.2021
(73) Patentinhaber: voestalpine Stahl GmbH, 4020 Linz (AT)
(72) Erfinder: Kieberger, Nina, 4081 Hartkirchen (AT); Fritz, Bertram, 4052 Ansfelden (AT); Meier, Hannes, 4081 Hartkirchen (AT)
(74) Vertreter: HGF

(56) Entgegenhaltungen:
- US-A1- 2005 257 644
- US-A1- 2008 196 619
- US-A1- 2019 337 847
- US-B1- 6 174 347

## Beschreibung

Die Erfindung betrifft ein Verfahren zur Kreislaufführung metallurgischer Schlacken nach dem Oberbegriff des Anspruchs 1.

Die Erfindung betrifft ebenfalls die Verwendung im genannten Verfahren nach dem Oberbegriff des Anspruchs 15.

Metallurgische Schlacken sind bekannt. Eine metallurgische Schlacke ist eine Gesteinsschmelze, die im Wesentlichen aus nichtmetallischen Komponenten der Einsatzstoffe z.B. eines eingesetzten Metallerzes (Gangart) besteht. Sie kann aus verschiedenen Begleitmineralen bestehen bzw. mehrere Mineralphasen enthalten, wie zum Beispiel Sulfide (Magnetkies, Alabandin, Zinkblende, Wurtzit), Oxide (Spinell, Magnetit), Silikate (Fayalith, Merwinit). Die Zusammensetzung hängt stark davon ab, ob die Schlacke in einem eisenmetallurgischen oder nichteisenmetallurgischen Prozess erzeugt worden ist. Zudem gibt es Schlacken mit einer definierten Zusammensetzung, die als Hilfsmittel in der Verarbeitung von Metallschmelzen eingesetzt werden.

Metallurgische Schlacken können verschiedene Funktionen erfüllen. Einige Schlacken werden im Metallgewinnungsprozess verwendet, um das Metall gegen mögliche Oxidation abzudecken. Andere Schlacken dienen dazu, die Begleitelemente aufzunehmen und zwar die Elemente, die über die Gasphase nicht ausgehschieden werden. In einem Elektrolichtbogenofen werden metallurgische Schlacken eingesetzt, um die thermische Verluststrahlung zu reduzieren.

Metallurgische Schlacken können bei fast allen metallurgischen Herstellungs- und Verarbeitungsprozessen entstehen. Anhand ihrer Herstellungsmethode werden sie in Stahlwerks-, Metallhütten- und Hochofenschlacke unterteilt.

Es ist bekannt, Eisen im Hochofenprozess zu erzeugen. Dabei werden Eisenerze in einem kontinuierlichem Reduktions- und Schmelzprozess bei hohen Temperaturen zu Roheisen reduziert. Der Hochofen wird mit Eisenerz Reduktionsmitteln und Zuschlägen befüllt. Das Eisenerz durchläuft den Ofen von oben nach unten, wobei die Temperatur im Hochofen von oben nach unten zunimmt (von 200 °C bis zu 2000 °C). Das für den Prozess notwendige Reduktionsgas durchströmt die Schüttung (Möller) des Hochofens von unten nach oben.

Als Eisenerze werden natürlich vorkommende chemische Eisenverbindungen bezeichnet. Die wirtschaftlich bedeutenden Eisenerze sind meist Eisenoxide oder Eisencarbonate. Die wichtigsten Eisenerzminerale sind Magnetit (Fe₃O₄, bis 72 % Eisengehalt), Hämatit (Fe₂O₃, bis 70 % Eisengehalt) und Siderit (FeCO₃, bis 48 % Eisengehalt).

Als Reduktionsmittel werden im Hochofenprozess Koks, pulverisierte Kohle und andere Stoffe eingesetzt. Als Koks wird eine stark kohlenstoffhaltige Verbindung bezeichnet, die aus Steinkohle via Pyrolyse erzeugt wird. Neben der Funktion als Reduktionsmittel dient Koks auch als Stützgerüst für den Prozess. Alternative Reduktionsmittel wie pulverisierte Kohle, Altkunststoffe, etc. können über die Windformen als Reduktionsmittel eingesetzt werden.

Die zugesetzten Zuschläge dienen dazu, die im Eisenerz enthaltenen Verunreinigungen zu binden. Diese Zuschläge und ehemalige Verunreinigungen im Eisenerz fallen am Ende des Hochofenprozesses als Hochofenschlacke an, die zum Schluss vom Roheisen abgetrennt wird.

Im Hochofen können vier verschiedene Temperatur- bzw. Prozesszonen unterschieden werden. Die oberste Zone ist die sogenannte Vorwärmezone, die eine Temperatur von ca. 200°C aufweist. Dabei wird das Eisenerz bzw. Reduktionsmittel getrocknet und vorgewärmt.

Die nächste Zone ist die sogenannte Reduktionszone bei Temperaturen von 400°C bis 800°C. Bei diesen Temperaturen liegt das Eisenerz noch im festen Zustand vor. Im unteren (heißen) Bereich der Reduktionszone, ab einer Temperatur von ca. 700°C, regiert das Eisenerz mit Kohlenstoffmonoxid, das aus der Umsetzungszone aufsteigt und reduziert die vorliegenden Eisenoxide zu Eisen. Bei dieser Redoxreaktion reagiert das Kohlenstoffmonoxid mit Eisenoxiden zu Eisen und Kohlenstoffdioxid.

Die nächste (untere) Zone ist die sogenannte Zone der direkten Reduktion (Umsetzungszone) bei Temperaturen von 1000°C bis 1600°C. In dieser Zone reagiert einerseits das noch nicht vollständig reduzierte Eisenoxid mit festem Kohlenstoff zu reinem metallischem Eisen und andererseits das Reduktionsmittel mit dem eingeblasenen Sauerstoff, der in der Schmelzzone eingeblasen wird, zu Kohlenstoffdioxid.

Für die Vorgänge im Hochofen ist das Boudouard-Gleichgewicht zwischen Kohlenstoff, Kohlenstoffmonoxid und Kohlenstoffdioxid entscheidend:

COz + C ↔ CO

Dabei reagiert Kohlenstoffdioxid mit Kohlenstoff zu Kohlenstoffmonoxid. Für die Reaktion ist allerdings eine Temperatur von mindestens 1000 °C erforderlich. Höhere Temperaturen verschieben das Gleichgewicht auf Grund der endothermen Reaktion auf die Produktseite, während tiefere Temperaturen die Bildung von Kohlenstoffdioxid und Kohlenstoff begünstigen. Diese Vorgänge beruhen auf dem Prinzip von Le Chatelier.

Nach dem Durchlaufen des Hochofenprozesses liegt das erzeugte Eisen als Roheisen vor, das einer weiteren metallurgischen Verarbeitung unterzogen wird.

Heute werden als Reduktionsmittel in einem Hochofenprozess auch Kunststoffabfälle verwendet. Dies hat den Vorteil, dass die Kunststoffabfälle einerseits nicht deponiert werden müssen und anderseits, im Gegensatz zu Koks, schwefelfrei sind. Außerdem verringert die Verwendung von Kunststoffabfällen im Hochofenprozess die COz und SOz Emissionen.

Es ist außerdem seit langem bekannt, die am Ende des Hochofenprozesses anfallende Schlacke als Kunststofffüllmittel zum Zwecke der Entsorgung zu verwenden.

Aus der DE 38 11 392 A1 ist es bekannt, toxische Stoffe in Kunststoff einzubetten, um sie auf diese Weise deponieren zu können. Aus dem gefüllten Kunststoff sind die toxischen Stoffe nicht oder nur in zulässig geringen Mengen auswaschbar oder ausschwemmbar. Der Anteil des Füllmittels kann dabei 80 Gew.-% erreichen, ohne die Stabilität des Komposits zu beeinträchtigen. Ein derartiges Kunststoffkomposit ist nicht mehr toxisch und kann sogar zur Herstellung gebräuchlicher Gegenstände, einschließlich Essgeschirr, verwendet werden. Die hohe Stabilität des Endprodukts wird durch eine chemische Reaktion erreicht. Hierfür wird das toxische Substanzen enthaltende Füllmittel mit einer N-Gruppen tragenden Kunststoffkomponente vermengt und gemeinsam mit einer anderen Kunststoffkomponente, die OH-Gruppen aufweist, in den Handel gebracht. Nach Vermischung der beiden Bestandteile wird die gewünschte chemische Reaktion und Aushärtung ausgelöst. Dies führt zu einem stabilen Kunststoffkomposit, das letztendlich einer Deponierung des toxischen Füllmittels dient.

Dabei ist es von Nachteil, dass Kunststoffe nicht langzeitstabil sind. Somit ist eine Langzeitstabilisierung toxischer Verbindungen mit Kunststoffen nicht möglich.

In DE 38 11 392 A1 wird auch die Einbettung von Hochofenschlacke in Kunststoff erwähnt. Bei dieser Schlacke handelt es sich jedoch um ein Produkt des Hochofenprozesses und nicht um toxisches Material.

Heute wird die Hochofenschlacke auch als Kunststofffüllmittel zum Zwecke der Funktionalisierung verwendet.

Aus der AT 313 589 ist es bekannt, synthetischen β-Wollastonit als Kunststofffüllmittel zu verwenden. Der β-Wollastonit wird einem Kunststoff zugesetzt, um die Eigenschaften des Endprodukts beliebig zu modifizieren. Insbesondere wird ein feinkristalliner synthetisch hergestellter β-Wollastonit mit einer BET-Oberfläche von 1-100 m²/g und einem hohen Weißanteil eingesetzt. Der Weißgehalt beträgt im Vergleich zum Standardweiß des Magnesiumoxids etwa 93 %. Deshalb eignet sich der Füllstoff besonders gut als Weißpigment für Farben und Anstriche.

Auch andere Kunststoffeigenschaften können mittels Zusatz von Füllmitteln kontrolliert modifiziert werden. Aus der CN 109370044 A ist ein Kunststoffkomposit bekannt, das zu 60-98 % aus Polypropylen und zu 1-30 % aus Hochofenschlacke besteht. Um die beiden Komponenten miteinander besser verbinden zu können, wird ein Silankopplungsreagenz (1-10%) zugesetzt. Die verwendete Hochofenschlacke weist eine Materialdichte von 950-970 kg/m³ und enthält Partikel in der Größenordnung von 1-10 µm. Durch den Zusatz von Hochofenschlacke wird der Flammpunkt des Polypropylens gezielt runtergesetzt. Die Zündzeit wird um mehr als 25 % verlängert. Dabei wird die Dehngrenze des Komposits um mehr als 20 % erhöht. Ein derart modifiziertes Kunststoffkomposit wird zur Herstellung alltäglicher Gebrauchsgegenstände, Kunststoffrohre, aber auch in der Automobilindustrie eingesetzt.

Aus A. Mostafa et al., Blast furnace slag as functional fillers on rheological, thermal, and mechanical behaviourofthermoplastics(J. Appl. Polym. Sci. 2016, p. 43021) ist es bekannt, Thermoplaste, wie Polypropylen und Polystyrol, mit Hochofenschlacke zu funktionalisieren. Hierbei wird eine fein gemahlene Hochofenschlacke mit Partikelgröße von 1-100 µm dem Kunststoff zugesetzt. Der Füllgrad beträgt dabei maximal 30 Gew.-%. Das daraus resultierende Kunststoffkomposit weist eine erhöhte Scherviskosität bzw. Elastizität auf. Die Festigkeit wird durch den Zusatz des Füllmittels verringert. Außerdem erhöht der Zusatz der Hochofenschlacke die Kristallisationstemperatur und hemmt den Kristallisationsprozess des Polypropylens.

Es ist bekannt, dass die meisten Kunststoffe mit mineralischen Füllstoffen chemisch inkompatibel sind. Um beide Substanzen miteinander zu verbinden, werden üblicherweise Silankopplungsreagenzien eingesetzt. In A. Mostafa et al., Influence of filler treatments on the behaviour ofblast furnace slag filled polypropylene compounds (J. Appl. Polym. Sci., 2018, p. 46535) wird der Einfluss der Silanisierung auf die mechanischen Eigenschaften des Kunststoffkomposits untersucht. Dabei wird die Hochofenschlacke mit Vinylethoxysilan bzw. Methacryloxypropyltrimethoxysilan funktionalisiert und anschließend als Füllstoff für ein Polypropylenkomposit verwendet. Dabei hat es sich gezeigt, dass die vorhergehende Silanisierung einen großen Einfluss auf die Scherviskosität, Wärmeleitfähigkeit und Kristallinität des Komposits hat.

Aus der WO90/14130 ist es bekannt, Kunststoffe insbesondere mit Stoffen zu füllen, die toxische Bestandteile und insbesondere Schwermetalle enthalten, hierunter sind auch Gichtstaub und Hochofenschlacke genannt. Hierzu ist anzumerken, dass durch die Auswahl der Rohstoffe einerseits Hochofenschlacke einer solchen Entsorgung nicht mehr bedarf, zum Anderen ist es nicht zulässig, Kunststoffe die anschließend einer Verwendung zugeführt werden mit Schwermetallen oder anderen Giftstoffen zu versetzen.

Aus der DE 10 2015 014 234 A1 ist es bekannt, Reduktionsgase im Hochofenprozess zurückzuführen.

Aus Voestalpine (Herausg.): Ersatzreduktionsmittel, Internetpublikation, 2018, ist es bekannt, dass seit dem Jahr 2007 können bis zu 220.000 jato Kunststoff in den Hochofen als alternatives Reduktionsmittel eingeblasen werden. Unter Erfüllung von verschiedenen Qualitätsanforderungen werden Altkunststoffe in Form von Pellets, Agglomeraten oder Granulaten eingesetzt.

Patentdokumente US 2005/257644 A1 und US 6 174 347 B1 offenbaren auch ein Verfahren zur Kreislaufführung metallurgischer Schlacken, wobei eine in einem metallurgischen Prozess erzeugte Schlacke mit einem Energieträger und/oder Reduktionsmittel vermischt wird und dabei ein Verbundwerkstoff erzeugt wird.

Aus den bisherigen Verfahren ergeben sich Probleme. Die dem Stand der Technik bekannten Prozesse sind ressourcenintensiv und verbrauchen viel Energie. Bisher werden natürliche nicht nachwachsende Ressourcen (wie Calciumcarbonate, Talk) als Einsatzstoff für Kunststofffüllstoffe verwendet. Dadurch ist keine Kreislaufökonomie möglich. Dies führt zur Abfallproduktion und Steigerung der Emissionen.

Außerdem sind die Anforderungen an Kunststofffüllstoffe sehr hoch, da der Füllstoff sehr fein und homogen vorliegen muss. Dafür ist eine aufwendige Aufarbeitung des Füllstoffs notwendig.

Aufgabe der Erfindung ist es, ein Verfahren zur Kreislaufführung metallurgischer Schlacke zu schaffen.

Die Aufgabe wird mit dem Verfahren mit den Merkmalen des Anspruchs 1 gelöst.

Vorteilhafte Weiterbildungen sind in den hiervon abhängigen Unteransprüchen gekennzeichnet.

Eine weitere Aufgabe der Erfindung ist es, eine Verwendung im genannten Verfahren zu schaffen.

Die Aufgabe wird mit der Verwendung mit den Merkmalen des Anspruchs 15 gelöst.

Vorteilhafte Weiterbildungen sind in den hiervon abhängigen Unteransprüchen gekennzeichnet.

Die Erfindung sieht vor, dass die metallurgische Schlacke mit einem Energieträger bzw. Reduktionsmittel vermischt wird. Das Gemisch wird anschließend einer sekundären Nutzung zugeführt. Am Lebensende findet eine Rückführung in den metallurgischen Prozess statt und sowohl die Schlacke als auch der Energieträger und/oder das Reduktionsmittel werden im metallurgischen Prozess genutzt. Vorzugsweise werden die Schlacken genau dem spezifischen Kreislauf zugeführt, dem sie entstammen, z.B. wird die Hochofenschlacke dem Hochofen zugesetzt.

Somit wird erstmal eine gezielte Rückführung einer Schlacke betrieben, so dass nicht irgendein Füllstoff in den metallurgischen Kreislauf gelangt, sondern die Schlacke, die auch am Ende des metallurgischen Prozesses wieder vorliegt.

Der so eingesetzte Füllstoff ist also für den metallurgischen Prozess auf keinen Fall schädlich. Viel mehr ist eine rückgeführte Schlacke aus mehreren Aspekten gesehen nützlich. Jeder metallurgische Prozess in dem Schlacken zum Einsatz kommen ist auf eine Menge an Schlacke angewiesen. So wird beispielsweise beim Anfahren von Hochöfen sogar stückige Schlacke zugegeben um ausreichend Schlacke zur Verfügung zu haben. Zudem wirkt die Schlacke, wenn sie als Füllstoff rückgeführt wird als Flussmittel und das Aufschmelzen derselben findet einfacher statt, da die Schlacke ja erstarrte Schmelze ist. Zudem ist die Schlacke in der Lage Stoffe wie Schwefel oder Alkalien aufzunehmen, da sie auch bei mehrmaligem Durchgang bzw. Rückführungen an den Stoffen noch nicht gesättigt ist.

Für diesen Vorgang sind alle Schlacken geeignet, die in metallurgischen Prozessen entstehen. Es kann sich um eine Hochofenschlacke handeln, die bei der Erzeugung des Roheisens durch thermische Reduktionsprozesse im Hochofen entsteht. Sie kann aus den nichtmetallischen Komponenten des Eisenerzes, Bestandteilen des Reduktionsmittels bzw. Kohle bestehen. Außerdem kann sie Zuschläge, wie beispielsweise Kalkstein oder Dolomit enthalten.

Es können auch Stahlwerkschlacken, wie zum Beispiel Konverterschlacke bzw. LD-Schlacke, Elektroofenschlacke, Edelstahlschlacke oder die sekundärmetallurgische Schlacke, die bei der Nachbehandlung von Rohstahl entsteht, verwendet werden.

Darüber hinaus kann Metallhüttenschlacke, die Schlacken aus den Zuschlägen der Verhüttung von Kupfer-, Zink-, Blei- und Chromerz mit Eisen als Austauschmetall umfasst, eingesetzt werden.

Als Energieträger und/oder Reduktionsmittel werden hier kohlenstoffhaltige Verbindungen bezeichnet, die eine Doppelfunktion haben. Einerseits dienen sie der Reduktion des Eisenerzes, andererseits wird durch ihre Verbrennung Energie freigesetzt, die im Hochofenprozess verwendet wird.

Dabei kann es sich um organische Verbindungen handeln, wie beispielsweise Polymere, Oligomere oder molekulare Stoffe. Als zusätzliche Füllstoffe können organische oder anorganische Energieträger verwendet werden, z.B. Koksmehl, Kohlenstoffmehl, Holzmehl oder Ähnliches.

Nach dem Vermischen der Schlacke mit dem Energieträger und/oder Reduktionsmittel, wird ein Gemisch erzeugt. Bei dem Gemisch kann es sich um einen Verbundwerkstoff handeln. Der Verbundwerkstoff wird einer Sekundärnutzung zugeführt.

Die sekundäre Nutzung umfasst übliche Verarbeitungsschritte, wie Gießen, Formen u.ä., die zur Herstellung eines Formkörpers führen. Anschließend wird der derart hergestellte Formkörper entweder industriell weiter verarbeitet, beispielsweise in der Elektro-, Mobilitäts- oder Verpackungsindustrie, oder er wird den Endnutzer als ein Gebrauchsgegenstand erreichen.

Am Lebensende wird der aus dem genannten Gemisch hergestellte Formkörper in den Hochofen zurückgeführt und thermisch in seine Bestandteile gespalten. Die Schlacke und der Energieträger und/oder das Reduktionsmittel werden dem Eisengewinnungs- und/oder Verarbeitungsprozess zugeführt.

Der Energieträger und/oder das Reduktionsmittel wird im Hochofen zur Reduktion des Eisenerzes verwendet und verbraucht. Die Schlacke wird regeneriert und einem neuen Energiekreislauf als mineralisches Füllmittel zugeführt.

Die regenerierte Schlacke kann eine Anwendung auch in anderen metallurgischen Prozessen finden, beispielsweise im Lichtbogenofen oder in der Sekundärmetallurgie.

Dabei ist von Vorteil, dass die Ressourcen schonend verwendet werden und am Ende dem Energiekreislauf wieder zugeführt werden. Derart wird die Herstellung neuer Stoffe vermieden und das Deponieren verbrauchter Kunststoffabfälle verhindert. Zudem kann der Zusatz abgebauter mineralischer Stoffe wie Calciumcarbonate, Talk als Füllstoff durch einen immer wieder im Kreislauf geführten Füllstoff ersetzt werden. Dies schont Ressourcen und die bei der Verarbeitung aufgewendete Energie kann eingespart werden.

Der verwendete Energieträger und/oder das Reduktionsmittel kann eine polymere Verbindung sein, insbesondere ein Kunststoff auf Kohlenstoffbasis. Ein derartiger Kunststoff kann beispielsweise ein Thermoplast, Duroplast und/oder ein Elastomer sein.

Häufig verwendete Thermoplaste sind beispielsweise Polypropylen, Polystyrol, Polyvinylchlorid, Polyethylen, Polyethylenterephtalat, Polyetheretherketon.

Häufig verwendete Duroplaste sind beispielsweise Bakelit, Polyamid, Vinylester, Epoxidharz.

Häufig verwendete Elastomere sind beispielsweise Polybutadien, Chloropren, Neopren, Nitril, Ethylenvinylacetat.

Bei der metallurgischen Schlacke handelt es sich um ein Stoffgemisch mineralischen Ursprungs. Es besteht zum größten Teil aus oxidischen Bestandteilen. Die darin enthaltenen Oxide können sauer, basisch oder amphoter sein. Saure Oxide sind meistens Nichtmetalloxide, beispielsweise SiOz. Als basische Oxide werden meistens Metalloxide bezeichnet, wie zum Beispiel MgO, CaO, NazO, K₂O. Amphotere Oxide sind Oxide, die abhängig von Reaktionspartner teils saures teils basisches Verhalten zeigen können, wie zum Beispiel Al₂O₃.

Die erfindungsgemäße Schlacke kann beispielsweise die folgende chemische Zusammensetzung aufweisen:

| | |
|---|---|
| SiO2 | 28,0 - 45,0% |
| Al2O3 | 6,0 - 17,0 % |
| CaO | 26,0 - 45,0 % |
| MgO | 7 - 12 % |
| Mn | 0,5 - 3,0 % |
| FeO | < 1,0 % |
| Fe_{ges.} | < 1 % |
| TiO2 | < 1,8 % |
| Na2O | ≤ 0,6 % |
| K2O | ≤ 2,0 % |
| S_{ges.} | < 1,5 % |

Eine solche Schlacke kann eine Hochofenschlacke sein oder jede andere metallurgische Schlacke, die gegebenenfalls auf diese Zusammensetzung hin eingestellt oder optimiert wird.

Die Schlacke kann mittels eines Kugelmühl- und/oder Jetmühl-Prozesses feingemahlen werden. Die daraus resultierenden Partikel weisen eine Korngröße von unter 20 µm auf (d98 < 20 µm). Nach der Feinmahlung kann die Schlacke einem Sichtungsprozess unterzogen werden. Hierdurch werden die abrasiven Eigenschaften minimiert. Am Ende sind keine Grobpartikel in der Schlacke vorhanden. Die Abrasivität kann besonders bevorzugt einen Wert von weniger als 20 mg gemäß Einlehner 1000 - Test aufweisen. Dieser Wert kann in einem Abrasionstestgerät wie zb. DE2033592 gemessen werden.

Die derart erzeugte Schlacke aufweist eine BET-Oberfläche von maximal 10 m2/g.

Der derart hergestellte Füllstoff kann direkt beim Kunststoff-Hersteller zu fertigen Compound-Werkstoffen oder Masterbaches verarbeitet werden.

Es ist vorteilhaft, wenn der Kunstsoff bezüglich seines Füllstoffs gekennzeichnet wird, um eine sortenreine Trennung und eine Rückführung in den spezifischen metallurgischen Prozess zu ermöglichen.

Somit betrifft die Erfindung insbesondere ein Verfahren zur Kreislaufführung metallurgischer Schlacken, wobei eine in einem metallurgischen Prozess erzeugte Schlacke mit einem Energieträger und/oder Reduktionsmittel vermischt wird und dabei ein Verbundwerkstoff erzeugt wird, wobei der Verbundwerkstoff einer sekundären Nutzung zugeführt wird und am Lebensende in den entsprechenden metallurgischen Prozess zurückgeführt wird, wobei der Verbundwerkstoff einerseits Schlacke und andererseits Energie liefert und/oder reduzierend wirkt, wobei der Energieträger und/oder das Reduktionsmittel im metallurgischen Prozess verbraucht wird und die metallurgische Schlacke am Ende des Prozesses abgetrennt und einem neuen Kreislauf zugeführt wird.

Es ist vorteilhaft, wenn die metallurgische Schlacke mit dem Energieträger und/oder Reduktionsmittel gemischt wird, wobei die metallurgische Schlacke eine Hochofenschlacke ist. Weiterhin vorteilhaft ist es, wenn die metallurgische Schlacke mit dem Energieträger und/oder Reduktionsmittel gemischt wird, wobei die metallurgische Schlacke eine Stahlwerkschlacke, insbesondere eine LD-Schlacke ist.

Vorteilhafterweise wird die metallurgische Schlacke mit dem Energieträger und/oder Reduktionsmittel gemischt, wobei die metallurgische Schlacke eine Metallhüttenschlacke ist.

In einer vorteilhaften Ausführungsform wird die metallurgische Schlacke gemahlen und/oder klassiert, um ein gewünschtes Kornband und/oder eine gewünschte Kornverteilung einzustellen.

In einer weiteren Ausführungsform wird die metallurgische Schlacke fein gemahlen wird. Vorteilhafterweise wird die metallurgische Schlacke nach der Feinmahlung einem Sichtungsprozess unterzogen, um ein definiertes Kornband einzustellen.

Eine vorteilhafte Ausführungsform sieht vor, dass eine metallurgische Schlacke verwendet wird, die eine Partikelgröße von unter 20 µm aufweist.

Zudem ist es vorteilhaft, wenn eine metallurgische Schlacke verwendet wird, die eine BET-Oberfläche von kleiner gleich 10 m²/g aufweist, wie in dem beigefügten Anspruchssatz offenbart.

Eine weitere vorteilhafte Ausführungsform sieht vor, dass eine metallurgische Schlacke verwendet wird, die die folgende chemische Zusammensetzung aufweist:

| | |
|---|---|
| SiO2 | 28,0 - 45,0% |
| Al2O3 | 6,0 - 17,0 % |
| CaO | 26,0 - 45,0 % |
| MgO | 7 - 12 % |
| Mn | 0,5 - 3,0 % |
| FeO | < 1,0 % |
| Fe_{ges.} | < 1 % |
| TiO2 | < 1,8 % |
| Na2O | ≤ 0,6 % |
| K2O | ≤ 2,0 % |
| S_{ges.} | < 1,5 % |

In einer weiteren Ausführungsform wird eine metallurgische Schlacke verwendet, die eine silanfreie und/oder kopplerfreie, insbesondere silankopplerfreie, Zusammensetzung hat.

Vorteilhafterweise wird die metallurgische Schlacke mit dem Energieträger und/oder Reduktionsmittel gemischt wird, wobei der Energieträger und/oder das Reduktionsmittel eine polymere Verbindung auf Kohlenstoffbasis ist, z.B. ein Thermoplast, ein Duroplast und/oder ein Elastomer.

Zudem ist es vorteilhaft, wenn die metallurgische Schlacke mit dem Energieträger und/oder Reduktionsmittel gemischt wird, wobei der Energieträger und/oder das Reduktionsmittel formgebend ist.

Weiterhin vorteilhaft ist es, wenn die metallurgische Schlacke als funktioneller Füllstoff mit einem Energieträger-Kunststoff compoundiert wird.

Eine Ausführungsform sieht vor, dass der erzeugte Verbundwerkstoff zu einem Formkörper verarbeitet wird.

Eine weitere Ausführungsform sieht vor, dass der erzeugte Verbundwerkstoff bezüglich der verwendeten Schlacke gekennzeichnet wird.

Eine besonders vorteilhafte Ausführungsform sieht einen mineralischen Füllstoff zur Verwendung in einem Kreislaufverfahren vor, wobei der Füllstoff eine metallurgische Schlacke ist, wobei die metallurgische Schlacke silanfrei und/oder kopplerfrei, insbesondere silankopplerfrei, ist und die folgende chemische Zusammensetzung hat:

| | |
|---|---|
| SiO2 | 28,0 - 45,0% |
| Al2O3 | 6,0 - 17,0 % |
| CaO | 26,0 - 45,0 % |
| MgO | 7 - 12 % |
| Mn | 0,5 - 3,0 % |
| FeO | < 1,0 % |
| Fe_{ges.} | < 1 % |
| TiO2 | < 1,8 % |
| Na2O | ≤ 0,6 % |
| K2O | ≤ 2,0 % |
| S_{ges.} | < 1,5 % |

Es ist vorteilhaft, wenn die metallurgische Schlacke eine Hochofenschlacke ist.

Zudem ist es vorteilhaft, wenn die metallurgische Schlacke eine Stahlwerkschlacke, insbesondere eine LD-Schlacke ist.

Vorteilhafterweise ist die metallurgische Schlacke eine Metallhüttenschlacke.

In einer vorteilhaften Ausführungsform ist die metallurgische Schlacke fein gemahlen und/oder klassiert und weist eine Partikelgröße von unter 20 µm auf.

In einer weiterhin vorteilhaften Ausführungsform weist die metallurgische Schlacke eine BET-Oberfläche von kleiner gleich 10 m²/g auf.

Es ist besonders vorteilhaft, wenn die metallurgische Schlacke eine geringe Abrasivität von weniger als 20 mg gemäß Einlehner 1000 - Test aufweist.

Eine weitere nicht beanspruchten Ausführungsform sieht eine Verwendung einer unsilanisierten Schlacke als Kunststofffüllstoff vor.

Die Erfindung wird anhand einer Zeichnung beispielhaft erläutert. Es zeigen dabei:
- Fig. 1:: Nutzung der erfindungsgemäßen Schlacke in einer Kreislaufwirtschaft;
- Fig. 2:: Einzelne Etappen einer Kreislaufwirtschaft;
- Fig. 3:: Kunststoffkreislauf;
- Fig. 4:: Massenflussdiagramm;

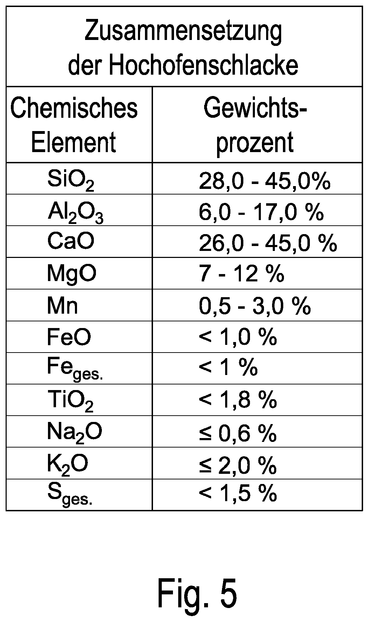

- Fig. 5:: Chemische Zusammensetzung der erfindungsgemäßen Hochofenschlacke.

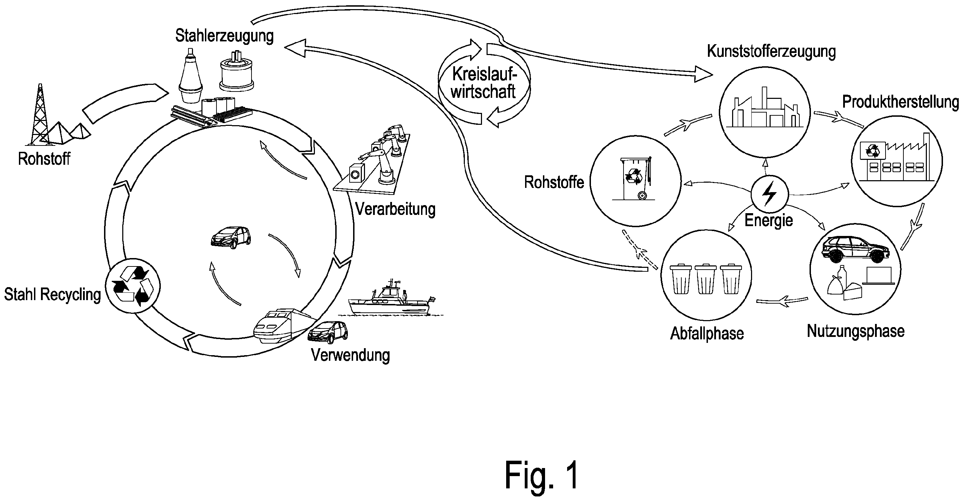

Die erfindungsgemäße Schlacke wird einer Kreislauwirtschaft zugeführt, indem sie als Füllstoff einem Kunststoff zugesetzt wird (Figur 1). Der die Schlacke enthaltende Kunststoff wird für die Herstellung diverser Kunststofferzeugnisse verwendet. Dabei kann es sich beispielsweise um Haushaltsprodukte, Verpackungen, industrielle Bauteile, Kunststoffartikel für die Automobilindustrie o.ä. handeln. Durch den Zusatz der Schlacke werden die mechanischen Eigenschaften der jeweiligen Kunststofferzeugnisse und/oder die Lebensdauer verbessert. Hierbei kann es sich um eine Verbesserung der Härte, Festigkeit, Verarbeitbarkeit o.ä. handeln.

Nach der Herstellungsphase werden die Schlacke enthaltenden Kunststofferzeugnisse einer Nutzung zugeführt. Am Ende der Nutzungsphase erreichen die Kunststofferzeugnisse die Abfallphase, in der sie für eine Wiederverwertung aufbereitet werden. Anschließend werden sie einem Stahlherstellungskreislauf zugeführt.

Im Hochofen werden der Kunststoff und die Schlacke thermisch voneinander getrennt. Der Kunststoff wird dem Stahlherstellungsprozess als Energieträger und/oder Reduktionsmittel zugeführt. Die Schlacke wird regeneriert und kann einem neuen Kreislauf zugeführt werden.

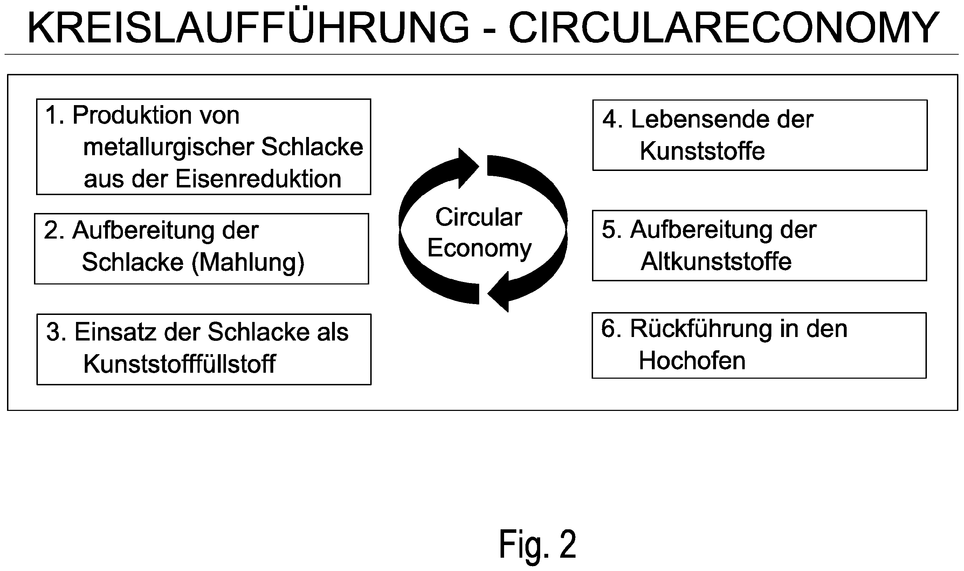

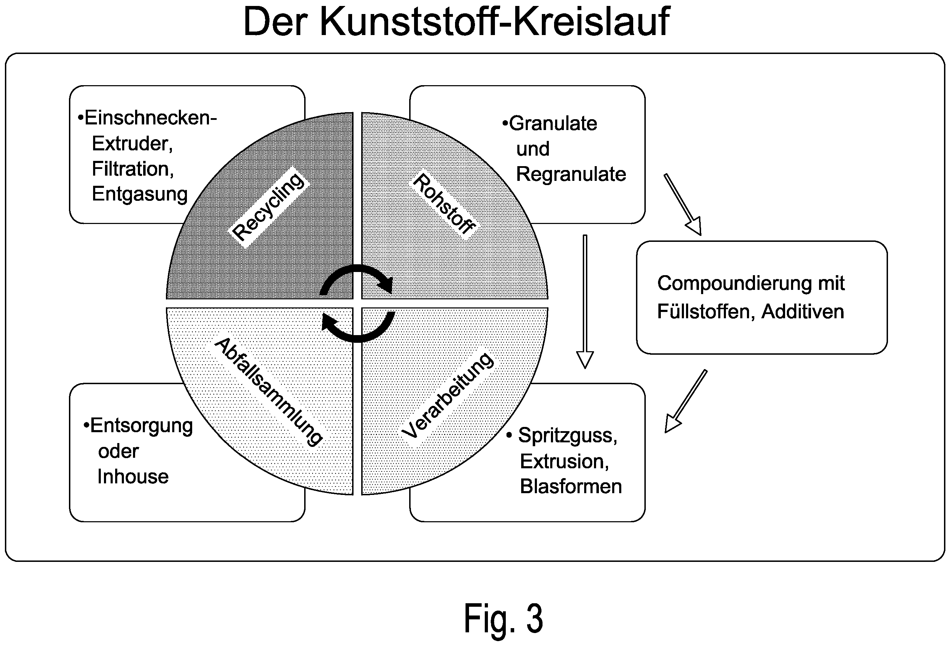

Vor der Verwendung als mineralischer Füllstoff kann die Schlacke beispielsweise durch Mahlung aufbereitet werden (Figur 2). Anschließend wird sie einem Kunststoffkreislauf als mineralischer Füllstoff zugeführt (Figur 3). Dabei wird ein Kunststoff-Rohstoff, z. B. ein Kunststoffgranulat, mit der Schlacke versetzt. Dieser Prozess wird als Compoundierung bezeichnet.

Die derart compoundierten Kunststoffgranulate werden einem oder mehreren Verarbeitungsschritten unterzogen, die zu einem fertiggestellten Kunststofferzeugnis führen. Dabei kann es sich um Prozesse, wie beispielsweise Spritzguss, Extrusion oder Blassformen handeln.

Am Lebensende werden die Kunststofferzeugnisse entweder direkt entsorgt oder durch Recycling aufbereitet. Die Kunststoffaufbereitung kann solche Prozesse wie Einschnecken, Extrusion, Filtration oder Entgasung umfassen. Das Ziel einer derartigen Aufbereitung ist die Herstellung eines Kunststoffgranulats, das einer erneuten Compoundierung und Verarbeitung unterzogen werden kann.

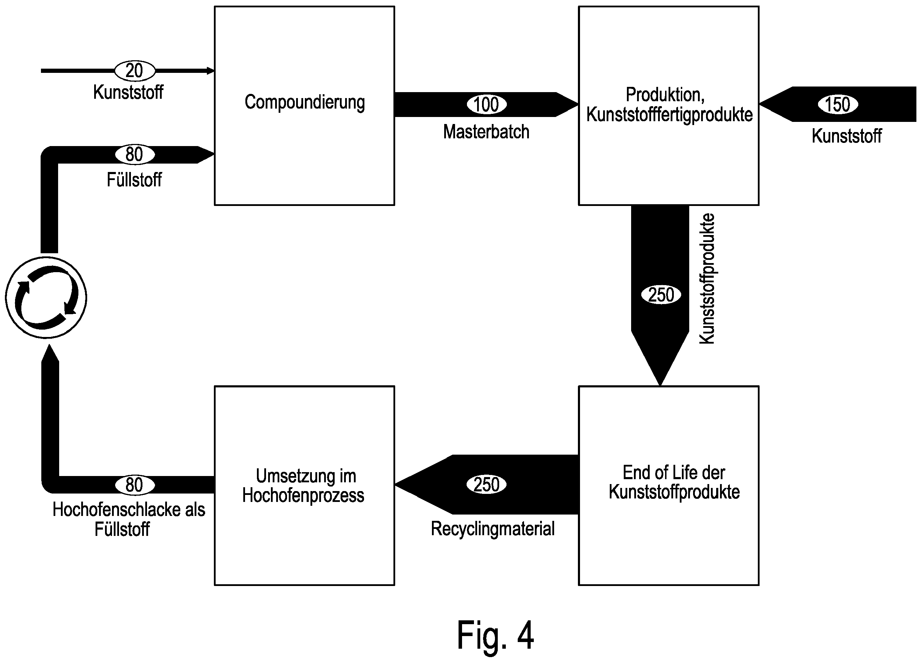

Nachfolgend wird auf die Massenströme während des gesamten Zyklusses näher eingegangen. Zunächst wird bei der Compoundierung ein s. g. Masterbatch erzeugt, hierzu werden ein Massenstromanteil von 80 eines Füllstoffes und ein Massenstromanteil von 20 eines Kunststoffes als Masterbatch mit dem Massenstromanteil 100 zusammengeführt (Figur 4).

Der derart erzeugte Masterbatch wird als Basis für die Herstellung der späteren Kunststofferzeugnisse verwendet. Während der Herstellung kann noch zusätzlich Kunststoff, z. B. in der Höhe von 150 Massenanteilen, zugegeben werden. Das fertiggestellte Endprodukt kann somit 250 Massenanteile enthalten. Am Ende der Lebensdauer wird dementsprechend ein Massenstromanteil von 250 einem Hochofenprozess zugeführt. Im Hochofenprozess wird ein Massenstromanteil von 170 ausgeschleust in Form von dem Kunststoffanteil der thermisch verwertet wird. Es verbleibt ein Feststoffmassenstromanteil von 80 in Form von Hochofenschlacke aus dem Compound-Material. Dieser Feststoffmassenstromanteil wird in den Kreislauf zurückgeführt, in dem er wiederum mit einem Kunststoffanteil von 20 zu einem Masterbatch verarbeitet wird.

Die Erfindung wird anhand eines Beispiels beispielhaft erläutert.

Bei der erfindungsgemäßen Schlacke handelt es sich um eine Hochofenschlacke, die die folgende chemische Zusammensetzung aufweist:

| | |
|---|---|
| SiOz | 36,7% |
| Al₂O₃ | 12,9% |
| CaO | 34,9% |
| Mg0 | 10,5% |
| Mn | 0,8% |
| Fe0 | 0,4% |
| Fe_{ges.} | 0,4% |
| TiOz | 1,1% |
| NazO | 0,3% |
| K₂O | 1,2% |
| S_{ges.}. | 0,8% |

Fe_{ges} bezeichnet den gesamten Anteil an elementaren Eisen in jeglicher Form (mit Ausnahme von oxdischem Eisen, welches als FeO separat gekennzeichnet ist).

S_{ges} bezeichnet den gesamten Anteil an elementaren Schwefel.

Die Hochofenschlacke wird im Schmelzfluss vom Metall abgetrennt und in flüssigem Zustand abgekühlt: entweder mit Wasser oder durch Abgießen. Erfindungsgemäß wird die abgekühlte Schlacke mittels eines Kugelmühl- und/oder Jetmühlprozesses fein gemahlen. 98 % der Partikel haben eine Korngröße unter 20 µm. Die Abrasivität ist hier deutlich minimiert.

Die erfindungsgemäß hergestellte Hochofenschlacke wird im nächsten Schritt als mineralischer Füllstoff verwendet. Dafür wird sie mit einem bei Raumtemperatur festen Energieträger und/oder Reduktionsmittel, das in Pulverform vorliegt, vermengt. Dabei wird sie im Fall von Thermoplasten bevorzugt auf einer Doppelschnecken-Compoundinganlage in eine Polymerschmelze eindispergiert und abschließend zu einem üblichen Kunststoff-Granulat (ca. 3-5 mm Durchmesser) am Heißstrang oder über eine Unterwassergranulierung granuliert. Im Fall von Duromeren ist die direkte Einmischung und Dispergierung in Harze bei Raumtemperatur und unter Verwendung von Rührvorrichtungen, wie sie in der Lackindustrie üblich sind, möglich.

Der dabei entstandene Verbundwerkstoff wird anderen Verarbeitungsschritten, die zu einem Formkörper führen, unterzogen. Im Regelfall handelt es sich hierbei um diskontinuierlichen Spritzguss oder eine kontinuierliche Extrusion. Der fertig geformte Formkörper wird in den Nutzungskreislauf eingeführt, am Lebensende eingesammelt und zum Schluss dem Hochofenprozess zugeführt. Im Hochofen wird der Verbundwerkstoff thermisch in die Hochofenschlacke und den Energieträger und/oder das Reduktionsmittel gespalten. Der Energieträger und/oder das Reduktionsmittel wird bei der Metallerzeugung verbraucht. Die Hochofenschlacke wird am Ende abgetrennt und einem neuen Kreislauf zugeführt.

## Patentansprüche

1. Verfahren zur Kreislaufführung metallurgischer Schlacken, wobei eine in einem metallurgischen Prozess erzeugte Schlacke mit einem Energieträger und/oder Reduktionsmittel vermischt wird und dabei ein Verbundwerkstoff erzeugt wird, wobei der Verbundwerkstoff einer sekundären Nutzung zugeführt wird und am Lebensende in den entsprechenden metallurgischen Prozess zurückgeführt wird, wobei der Verbundwerkstoff einerseits Schlacke und andererseits Energie liefert und/oder reduzierend wirkt, wobei der Energieträger und/oder das Reduktionsmittel im metallurgischen Prozess verbraucht wird und die metallurgische Schlacke am Ende des Prozesses abgetrennt und einem neuen Kreislauf zugeführt wird, wobei der Energieträger und/oder das Reduktionsmittel eine polymere Verbindung auf Kohlenstoffbasis ist, z.B. ein Thermoplast, ein Duroplast und/oder ein Elastomer, wobei eine metallurgische Schlacke verwendet wird, die eine BET-Oberfläche von kleiner gleich 10 m²/g aufweist.

2. Verfahren nach Anspruch 1, **dadurch gekennzeichnet, dass** die metallurgische Schlacke mit dem Energieträger und/oder Reduktionsmittel gemischt wird, wobei die metallurgische Schlacke eine Hochofenschlacke ist.

3. Verfahren nach Anspruch 1, **dadurch gekennzeichnet, dass** die metallurgische Schlacke mit dem Energieträger und/oder Reduktionsmittel gemischt wird, wobei die metallurgische Schlacke eine Stahlwerkschlacke, insbesondere eine LD-Schlacke ist.

4. Verfahren nach Anspruch 1, **dadurch gekennzeichnet, dass** die metallurgische Schlacke mit dem Energieträger und/oder Reduktionsmittel gemischt wird, wobei die metallurgische Schlacke eine Metallhüttenschlacke ist.

5. Verfahren nach einem der vorhergehenden Ansprüche, **dadurch gekennzeichnet, dass** die metallurgische Schlacke gemahlen und/oder klassiert wird, um ein gewünschtes Kornband und/oder eine gewünschte Kornverteilung einzustellen.

6. Verfahren nach Anspruch 5, **dadurch gekennzeichnet, dass** die metallurgische Schlacke gemahlen wird.

7. Verfahren nach einem der vorhergehenden Ansprüche, **dadurch gekennzeichnet, dass** die metallurgische Schlacke nach der Feinmahlung einem Sichtungsprozess unterzogen wird, um ein definiertes Kornband einzustellen.

8. Verfahren nach einem der vorhergehenden Ansprüche, **dadurch gekennzeichnet, dass** eine metallurgische Schlacke verwendet wird, die eine Partikelgröße von unter 20 µm aufweist.

9. Verfahren nach einem der vorhergehenden Ansprüche, **dadurch gekennzeichnet, dass** eine metallurgische Schlacke verwendet wird, die die folgende chemische Zusammensetzung aufweist:
| | |
|---|---|
| SiO2 | 28,0 - 45,0% |
| Al2O3 | 6,0 - 17,0 % |
| CaO | 26,0 - 45,0 % |
| MgO | 7 - 12 % |
| Mn | 0,5 - 3,0 % |
| FeO | < 1,0 % |
| Fe_{ges.} | < 1 % |
| TiO2 | < 1,8 % |
| Na2O | ≤ 0,6 % |
| K2O | ≤ 2,0 % |
| S_{ges.} | < 1,5 % |

10. Verfahren nach einem der vorhergehenden Ansprüche, **dadurch gekennzeichnet, dass** eine metallurgische Schlacke verwendet wird, die eine silanfreie und/oder kopplerfreie, insbesondere silankopplerfreie, Zusammensetzung hat.

11. Verfahren nach Anspruch 10, **dadurch gekennzeichnet, dass** die metallurgische Schlacke mit dem Energieträger und/oder Reduktionsmittel gemischt wird, wobei der Energieträger und/oder das Reduktionsmittel formgebend ist.

12. Verfahren nach Anspruch 11, **dadurch gekennzeichnet, dass** die metallurgische Schlacke als funktioneller Füllstoff mit einem Energieträger-Kunststoff compoundiert wird.

13. Verfahren nach Anspruch 1, **dadurch gekennzeichnet, dass** der erzeugte Verbundwerkstoff zu einem Formkörper verarbeitet wird.

14. Verfahren nach Anspruch 1, **dadurch gekennzeichnet, dass** der erzeugte Verbundwerkstoff bezüglich der verwendeten Schlacke gekennzeichnet wird.

15. Verwendung eines mineralischen Füllstoffes in einem Verfahren nach einem der vorhergehenden Ansprüche, **dadurch gekennzeichnet, dass**
der Füllstoff eine metallurgische Schlacke ist, wobei die metallurgische Schlacke silanfrei und/oder kopplerfrei, insbesondere silankopplerfrei, ist und die folgende chemische Zusammensetzung hat:
| | |
|---|---|
| SiO2 | 28,0 - 45,0% |
| Al2O3 | 6,0 - 17,0 % |
| CaO | 26,0 - 45,0 % |
| MgO | 7 - 12 % |
| Mn | 0,5 - 3,0 % |
| FeO | < 1,0 % |
| Fe_{ges.} | < 1 % |
| TiO2 | < 1,8 % |
| Na2O | ≤ 0,6 % |
| K2O | ≤ 2,0 % |
| S_{ges.} | < 1,5 % |

16. Verwendung nach Anspruch 15, **dadurch gekennzeichnet, dass** die metallurgische Schlacke eine Hochofenschlacke ist.

17. Verwendung nach Anspruch 15, **dadurch gekennzeichnet, dass** die metallurgische Schlacke eine Stahlwerkschlacke, insbesondere eine LD-Schlacke ist.

18. Verwendung nach Anspruch 15, **dadurch gekennzeichnet, dass** die metallurgische Schlacke eine Metallhüttenschlacke ist.

19. Verwendung nach Ansprüchen 15 bis 18, **dadurch gekennzeichnet, dass** die metallurgische Schlacke fein gemahlen und/oder klassiert ist und eine Partikelgröße von unter 20 µm aufweist.

20. Verwendung nach einem der Ansprüche 15 bis 18, **dadurch gekennzeichnet, dass** die metallurgische Schlacke eine geringe Abrasivität von weniger als 20 mg gemäß Einlehner 1000 - Test aufweist.

## Claims

1. A method for closed-loop circulation of metallurgical slags, wherein a slag produced in a metallurgical process is mixed with an energy source and/or reductant and in so doing a composite material is produced, wherein a secondary use is applied to the composite material and attributed to the corresponding metallurgical process at the end of its lifespan, wherein on the one hand the composite material yields slag and on the other hand energy and/or has a reductive effect, wherein the energy source and/or the reductant is consumed in the metallurgical process and at the end of the process the metallurgical slag is separated off and returned to a new closed loop, wherein the energy source and/or the reductant is a carbon-based polymer compound, e.g. a thermoplastic, a thermosetting plastic and/or an elastomer, wherein a metallurgical slag is used which has a BET surface area of less than or equal to 10 m²/g.

2. The method according to claim 1, **characterised in that** the metallurgical slag is mixed with the energy source and/or reductant, wherein the metallurgical slag is a blast-furnace slag.

3. The method according to claim 1, **characterised in that** the metallurgical slag is mixed with the energy source and/or reductant, wherein the metallurgical slag is a steel slag, in particular a LD slag.

4. The method according to claim 1, **characterised in that** the metallurgical slag is mixed with the energy source and/or reductant, wherein the metallurgical slag is a smelter slag.

5. The method according to one of the preceding claims, **characterised in that** the metallurgical slag is milled and/or sized in order to set a desired grain range and/or a desired grain distribution.

6. The method according to claim 5, **characterised in that** the metallurgical slag is milled.

7. The method according to one of the preceding claims, **characterised in that** the metallurgical slag is subjected to a screening process after comminution, in order to set a defined grain range.

8. The method according to one of the preceding claims, **characterised in that** a metallurgical slag is used which has a particle size of less than 20 µm.

9. The method according to one of the preceding claims, **characterised in that** a metallurgical slag is used which has the following chemical composition:
| | |
|---|---|
| SiO2 | 28.0 - 45.0% |
| Al2O3 | 6.0 - 17.0% |
| CaO | 26.0 - 45.0% |
| MgO | 7 - 12% |
| Mn | 0.5 - 3.0% |
| FeO | < 1.0% |
| Fe_{sat.} | < 1% |
| TiO2 | < 1.8% |
| Na2O | ≤ 0.6% |
| K2O | ≤ 2.0% |
| S_{sat.} | < 1.5% |

10. The method according to one of the preceding claims, **characterised in that** a metallurgical slag is used which has a silane-free and/or coupler-free, in particular silane-coupler-free composition.

11. The method according to claim 10, **characterised in that** the metallurgical slag is mixed with the energy source and/or reductant, wherein the energy source and/or the reductant has a shaping property.

12. The method according to claim 11, **characterised in that** the metallurgical slag is compounded with an energy source plastic as functional filler.

13. The method according to claim 1, **characterised in that** the produced composite material is processed into a mould.

14. The method according to claim 1, **characterised in that** the produced composite material is characterised with regard to the slag used.

15. A use of a mineral filler in a method according to one of the preceding claims, **characterised in that** the filler is a metallurgical slag, wherein the metallurgical slag is silane-free and/or coupler-free, in particular silane-coupler-free, and has the following chemical composition:
| | |
|---|---|
| SiO2 | 28.0 - 45.0% |
| Al2O3 | 6.0 - 17.0% |
| CaO | 26.0 - 45.0% |
| MgO | 7 - 12% |
| Mn | 0.5 - 3.0% |
| FeO | < 1.0% |
| Fe_{sat.} | < 1% |
| TiO2 | < 1.8% |
| Na2O | ≤ 0.6% |
| K2O | ≤ 2.0% |
| S_{sat.} | < 1.5% |

16. The use according to claim 15, **characterised in that** the metallurgical slag is a blast-furnace slag.

17. The use according to claim 15, **characterised in that** the metallurgical slag is a steel slag, in particular a LD slag.

18. The use according to claim 15, **characterised in that** the metallurgical slag is a smelter slag.

19. The use according to claims 15 to 18, **characterised in that** the metallurgical slag is finely milled and/or sized and has a particle size of less than 20 µm.

20. The use according to one of claims 15 to 18, **characterised in that** the metallurgical slag has a low abrasiveness of less than 20 mg according to the Einlehner 1000 test.

## Revendications

1. Procédé de recyclage des scories métallurgiques, dans lequel une scorie produite dans un procédé métallurgique est mélangée avec une source d'énergie et/ou un agent réducteur et un matériau composite est produit, le matériau composite étant utilisé de manière secondaire et renvoyé en fin de vie dans le procédé métallurgique correspondant, le matériau composite fournissant d'une part une scorie et d'autre part de l'énergie et/ou ayant un effet réducteur, la source d'énergie et/ou l'agent réducteur étant consommés dans le procédé métallurgique et la scorie métallurgique étant séparée à la fin du procédé et introduite dans un nouveau cycle, la source d'énergie et/ou l'agent réducteur étant un composé polymère à base de carbone, par exemple un thermoplastique, un Duroplast et/ou un élastomère, en utilisant une scorie métallurgique ayant une surface BET inférieure ou égale à 10 m² g.

2. Procédé selon la revendication 1, **caractérisé en ce que** la scorie métallurgique est mélangée avec la source d'énergie et/ou l'agent réducteur, la scorie métallurgique étant une scorie de haut fourneau.

3. Procédé selon la revendication 1, **caractérisé en ce que** la scorie métallurgique est mélangée avec la source d'énergie et/ou l'agent réducteur, la scorie métallurgique étant une scorie d'aciérie, en particulier une scorie LD.

4. Procédé selon la revendication 1, **caractérisé en ce que** la scorie métallurgique est mélangée avec la source d'énergie et/ou l'agent réducteur, la scorie métallurgique étant une scorie d'usine métallurgique.

5. Procédé selon l'une des revendications précédentes, **caractérisé en ce que** la scorie métallurgique est broyée et/ou tamisée pour ajuster une plage granulométrique désirée et/ou une distribution granulométrique souhaitée.

6. Procédé selon la revendication 5, **caractérisé en ce que** la scorie métallurgique est broyée.

7. Procédé selon l'une des revendications précédentes, **caractérisé en ce que** la scorie métallurgique est soumise, après le broyage fin, à un procédé de criblage pour ajuster une plage granulométrique définie.

8. Procédé selon l'une des revendications précédentes, **caractérisé en ce qu'**on utilise une scorie métallurgique, qui présente une taille de particule inférieure à 20 µm.

9. Procédé selon l'une des revendications précédentes, **caractérisé en ce qu'**on utilise une scorie métallurgique, qui présente la composition chimique suivante :
| | |
|---|---|
| SiO2 | 28,0 - 45,0% |
| Al2O3 | 6,0 - 17,0 % |
| CaO | 26,0 - 45,0 % |
| MgO | 7 - 12 % |
| Mn | 0,5 - 3,0 % |
| FeO | < 1,0 % |
| Fe_{ges.} | < 1 % |
| TiO2 | < 1,8 % |
| Na2O | ≤ 0,6 % |
| K2O | ≤ 2,0 % |
| S_{ges.} | < 1,5 %. |

10. Procédé selon l'une des revendications précédentes, **caractérisé en ce qu'**on utilise une scorie métallurgique qui a une composition exempte de silane et/ou exempte de coupleur, en particulier exempte de coupleur silane.

11. Procédé selon la revendication 10, **caractérisé en ce que** la scorie métallurgique est mélangée avec la source d'énergie et/ou l'agent réducteur, dans lequel la source d'énergie et/ou l'agent réducteur donne la forme.

12. Procédé selon la revendication 11, **caractérisé en ce que** la scorie métallurgique est mélangée en tant que charge fonctionnelle avec une matière plastique source d'énergie.

13. Procédé selon la revendication 1, **caractérisé en ce que** le matériau composite produit est transformé en un corps moulé.

14. Procédé selon la revendication 1, **caractérisé en ce que** le matériau composite produit est **caractérisé par** rapport à la scorie utilisée.

15. Utilisation d'une charge minérale dans un procédé selon l'une des revendications précédentes, **caractérisée en ce que**
la charge est une scorie métallurgique, la scorie métallurgique étant exempte de silane et/ou de coupleur, en particulier exempte de coupleurs de silane, et a la composition chimique suivante :
| | |
|---|---|
| SiO2 | 28,0 - 45,0 % |
| Al2O3 | 6,0 - 17,0 % |
| CaO | 26,0 - 45,0 % |
| MgO | 7 - 12 % |
| Mn | 0,5 - 3,0 % |
| FeO | < 1,0 % |
| Fe_{ges.} | < 1 % |
| TiO2 | < 1,8 % |
| Na2O | ≤ 0,6 % |
| K2O | ≤ 2,0 % |
| S_{ges.} | < 1,5 %. |

16. Utilisation selon la revendication 15, **caractérisée en ce que** la scorie métallurgique est une scorie de haut fourneau.

17. Utilisation selon la revendication 15, **caractérisée en ce que** la scorie métallurgique est une scorie d'aciérie, en particulier une scorie LD.

18. Utilisation selon la revendication 15, **caractérisée en ce que** la scorie métallurgique est une scorie d'usine métallurgique.

19. Utilisation selon les revendications 15 à 18, **caractérisée en ce que** la scorie métallurgique est finement broyée et/ou tamisée et présente une taille de particule inférieure à 20 µm.

20. Utilisation selon l'une des revendications 15 à 18, **caractérisée en ce que** la scorie métallurgique présente une faible abrasivité inférieure à 20 mg selon le test 1000 de Einlehner.
